(19) Europäisches Patentamt / European Patent Office / Office européen des brevets

(11) **EP 3 482 488 B1**

(12) **EUROPÄISCHE PATENTSCHRIFT**

(45) Veröffentlichungstag und Bekanntmachung des Hinweises auf die Patenterteilung:
**11.03.2020 Patentblatt 2020/11**

(21) Anmeldenummer: **17740009.0**

(22) Anmeldetag: **17.07.2017**

(51) Int Cl.:
**H02M 7/493** (2007.01)

(86) Internationale Anmeldenummer:
**PCT/EP2017/068008**

(87) Internationale Veröffentlichungsnummer:
**WO 2018/050319 (22.03.2018 Gazette 2018/12)**

(54) **REGELUNG VON PHASENSTRÖMEN PARALLEL GESCHALTETER WECHSELRICHTER**

CONTROL OF PHASE FLOWS OF INVERTER CONNECTED IN PARALLEL

REGLAGE DES COURANTS DE PHASE D'ONDULEURS COUPLES EN PARALLELE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2016 EP 16189016**

(43) Veröffentlichungstag der Anmeldung:
**15.05.2019 Patentblatt 2019/20**

(73) Patentinhaber: **Siemens Aktiengesellschaft 80333 München (DE)**

(72) Erfinder:
• **WIESSMANN, Harald**
  **91058 Erlangen (DE)**
• **DRESSEL, Bernd**
  **96138 Burgebrach (DE)**
• **SCHMITT, Maximilian**
  **97483 Eltmann (DE)**

(56) Entgegenhaltungen:
EP-A1- 3 059 848     WO-A1-2015/108614
US-A1- 2016 156 291

• DI ZHANG ET AL: "Common-Mode Circulating Current Control of Paralleled Interleaved Three-Phase Two-Level Voltage-Source Converters With Discontinuous Space-Vector Modulation", IEEE TRANSACTIONS ON POWER ELECTRONICS, INSTITUTE OF ELECTRICAL AND ELECTRONICS ENGINEERS, USA, Bd. 26, Nr. 12, 1. Dezember 2011 (2011-12-01), Seiten 3925-3935, XP011479936, ISSN: 0885-8993, DOI: 10.1109/TPEL.2011.2131681
• MAZUMDER S K: "A novel discrete control strategy for independent stabilization of parallel three-phase boost converters by combining space-vector modulation with variable-structure control", IEEE TRANSACTIONS ON POWER ELECTRONICS, INSTITUTE OF ELECTRICAL AND ELECTRONICS ENGINEERS, USA, Bd. 18, Nr. 4, 1. Juli 2003 (2003-07-01), Seiten 1070-1083, XP011098785, ISSN: 0885-8993, DOI: 10.1109/TPEL.2003.813770
• SCHELLEKENS J M ET AL: "Interleaved switching of parallel ZVS hysteresis current controlled inverters", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 2822-2829, XP031729073, ISBN: 978-1-4244-5394-8
• TARAK GHENNAM ET AL: "A Novel Space-Vector Current Control Based on Circular Hysteresis Areas of a Three-Phase Neutral-Point-Clamped Inverter", IEEE TRANSACTIONS ON INDUSTRIAL ELECTRONICS, IEEE SERVICE CENTER, PISCATAWAY, NJ, USA, Bd. 54, Nr. 8, 1. August 2010 (2010-08-01), Seiten 2669-2678, XP011297152, ISSN: 0278-0046

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 482 488 B1

**Beschreibung**

Die Erfindung betrifft die Regelung von Phasenströmen mehrerer parallel geschalteter dreiphasiger Wechselrichter.

Die Wechselrichter erzeugen jeweils gepulste Phasenspannungen, die mehrere Spannungswerte annehmen können. Dazu weist jeder Wechselrichter für jede Phase eine Schalteinheit mit mehreren Schaltzuständen auf, durch die die Phasenspannung der Phase jeweils auf einen der Spannungswerte gelegt wird.

Parallelschaltungen mehrerer Wechselrichter werden häufig verwendet, um die einzelnen Wechselrichter zu einem Wechselrichter mit einer höheren Gesamtleistung und Verfügbarkeit zusammenzuschalten. Oft werden die einzelnen Wechselrichter pulsweitenmoduliert mit einer indirekten Stromregelung betrieben. Dabei bekommen die einzelnen Wechselrichter entweder dieselben Ansteuersignale oder werden zur Reduzierung einer Oberschwingungsbelastung eines speisenden Netzes mit unterschiedlichen Pulsmustern angesteuert.

US 2016/0156291 A1 offenbart einen bidirektionalen Hochfrequenzgeschwindigkeitsantrieb, der konfiguriert ist, um eine Verbindung zu einem Versorgungsnetz und einer elektrischen Maschine herzustellen.

WO 2015/108614 A1 offenbart einen Mehrphasen-Stromrichter mit zwei oder mehr mehrphasigen, bidirektionalen, mehrstufigen Stromricher-Teilschaltungen, die an den jeweiligen Wechsel- und Gleichstromseiten parallel zueinander geschaltet sind.

EP 3059848 A1 offenbart eine Regelung von Querströmen in einem Stromnetz mit mehreren Stromrichtern.

Di Zhang et al: "Common-Mode Circulating Current Control of Paralleled Interleaved Three-Phase Two-Level Voltage-Source Converters With Discontinuous Space-Vector Modulation", IEEE Transactions on Power Electronics, Bd. 26, Nr. 12, Dezember 2011, Seiten 3925-3935, DOI: 10.1109/TPEL.2011.2131681 offenbart ein Verfahren zur Regelung eines Kreisstroms zwischen parallel geschalteten dreiphasigen spannungsgeführten Stromrichtern.

S. K. Mazumder: "A novel discrete control strategy for independent stabilization of parallel three-phase boost converters by combining space-vector modulation with variablestructure control", IEEE Transactions on Power Electronics, Seiten 1070-1083, DOI: 10.1109/TPEL.2003.813770 offenbart eine Regelung parallel geschalteter dreiphasiger Stromrichter.

Der Erfindung liegt die Aufgabe zugrunde, eine verbesserte Regelung von Phasenströmen mehrerer parallel geschalteter dreiphasiger Wechselrichter anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Bei einem erfindungsgemäßen Verfahren zur Regelung von Phasenströmen mehrerer parallel geschalteter dreiphasiger Wechselrichter werden die Phasenströme jedes Wechselrichters mit einer direkten Hysteresestromregelung geregelt, wobei ein Iststromraumzeiger für Istwerte der Phasenströme des Wechselrichters innerhalb eines Hysteresefensters um einen Sollstromraumzeiger gehalten wird. Der Iststromraumzeiger eines ersten Wechselrichters wird aus allen drei Phasenströmen des ersten Wechselrichters gebildet. Der Iststromraumzeiger jedes weiteren Wechselrichters wird aus genau zwei Phasenströmen des Wechselrichters unter der Annahme gebildet, dass sich alle drei Phasenströme des Wechselrichters zu Null addieren, wobei die Auswahl der beiden Phasenströme, aus denen der Iststromraumzeiger gebildet wird, variiert wird.

Unter einer Hystereseregelung wird eine Regelung verstanden, bei der die Regelgröße in einem Toleranzbereich um einen Sollwert gehalten wird. Der Toleranzbereich wird hier als Hysteresefenster bezeichnet. Unter einer direkten Stromregelung wird eine Stromregelung verstanden, deren Pulsmuster direkt aus einem Stromfehler abgeleitet wird. Bei einer indirekten Stromregelung hingegen wird zunächst ein Spannungssollwert ermittelt und anhand dieses Spannungswertes wird das Pulsmuster bestimmt.

Die Erfindung sieht also eine direkte Hysteresestromregelung der Phasenströme jedes Wechselrichters vor. Verglichen mit einer auf Pulsweitenmodulation basierenden indirekten Stromregelung ermöglicht eine direkte Stromregelung vorteilhaft eine höhere Dynamik und Robustheit, beispielsweise gegenüber Änderungen von Parametern der Regelstrecke, da bei einer auf Pulsweitenmodulation basierenden indirekten Stromregelung die innerhalb der Pulsperioden verwendeten Pulsmuster der Pulsweitenmodulation vorausberechnet werden müssen.

Die erfindungsgemäße Bildung der Iststromraumzeiger zur Regelung der Phasenströme dient dazu, zwischen den parallel geschalteten Wechselrichtern fließende Kreisströme zu reduzieren. Derartige Kreisströme sind Anteile von Nullsystemströmen der Wechselrichter. Ein Nullsystemstrom eines Wechselrichters ergibt sich als nicht verschwindende Summe der drei Phasenströme des Wechselrichters. Nullsystemströme werden durch parasitäre Elemente, z. B. parasitäre Kapazitäten, der parallel geschalteten Wechselrichter und unterschiedliche Schaltzustände der Wechselrichter verursacht.

Kreisströme zwischen parallel geschalteten Wechselrichtern sind gerade diejenigen Anteile der Nullsystemströme, die zwischen den Wechselrichtern fließen. Derartige Kreisströme reduzieren die Gesamtleistung der parallel geschalteten Wechselrichter, da sie zwischen den parallel geschalteten Wechselrichtern fließen und daher nicht zu den Netzströmen beitragen, die von den parallel geschalteten Wechselrichtern nach außen an ein Netz abgegeben werden.

Daher ist es vorteilhaft, derartige Kreisströme möglichst zu vermeiden bzw. zu reduzieren. Erfindungsgemäß wird dies erreicht, indem der Iststromraumzeiger jedes von einem ersten Wechselrichter verschiedenen weiteren Wechselrichters zu jedem Zeitpunkt aus genau zwei Phasenströmen gebildet wird, wobei angenommen wird, dass sich alle drei Phasenströme des Wechselrichters zu Null addieren, auch wenn dies im allgemeinen (nämlich bei einem nicht verschwindenden Nullsystemstrom) tatsächlich nicht der Fall ist. Dadurch werden die beiden Phasenströme, aus denen der Iststromraumzeiger eines der weiteren Wechselrichter gebildet wird, auf ihre Sollwerte geregelt, auch wenn ein Nullsystemstrom dieses Wechselrichters nicht verschwindet. Der dritte Phasenstrom wird zwar bei einem nicht verschwindenden Nullsystemstrom nicht auf seinen Sollwert geregelt. Jedoch wird durch das Variieren, d. h. durch ein zeitlich aufeinander folgendes Wechseln der Auswahl derjenigen Phasenströme, aus denen der Iststromraumzeiger des weiteren Wechselrichters jeweils gebildet wird, erreicht, dass alle drei Phasenströme nach einer kurzen Einschwingphase der Regelung wenigstens annähernd (innerhalb des Hysteresefensters) ihren Sollwerten entsprechen. Dadurch werden Nullsystemströme in den weiteren Wechselrichtern im Wesentlichen eliminiert (abgesehen von Nullsystemströmen mit Stromstärken im Bereich der Breite des Hysteresefensters). Ein Nullsystemstrom in dem ersten Wechselrichter wird zwar nicht aktiv ausgeregelt, führt jedoch aufgrund der Regelung der weiteren Wechselrichter nicht zu einem Kreisstrom zwischen dem ersten Wechselrichter und einem weiteren Wechselrichter.

Eine Ausgestaltung der Erfindung sieht vor, dass die Phasenströme jedes Wechselrichters unabhängig von den Istwerten der Phasenströme der anderen Wechselrichter geregelt werden. Gemäß dieser Ausgestaltung der Erfindung wird keine Kommunikation zwischen den einzelnen Wechselrichtern eingesetzt. Dadurch wird vorteilhaft die Modularität des aus mehreren Wechselrichtern bestehenden Gesamtsystems erhöht, so dass Wechselrichter in einfacher Weise zusammengeschaltet werden können, ohne eine Kommunikation zwischen den Wechselrichtern implementieren zu müssen. Ferner wird der Aufwand zur Realisierung des Gesamtsystems reduziert und die Robustheit des Gesamtsystems wird erhöht.

Die Erfindung sieht ferner vor, dass für jeden der weiteren Wechselrichter diejenige Phase, deren Phasenstrom nicht zur Bildung des Iststromraumzeigers verwendet wird, nicht geschaltet wird. Diese Ausgestaltung der Erfindung sieht also für jeden der weiteren Wechselrichter eine so genannte Flat-Top-Modulation vor, bei der in jeder Taktperiode der Regelung diejenige Phase nicht geschaltet wird, deren Phasenstrom momentan nicht zur Bildung des Iststromraumzeigers verwendet wird. Diese Ausgestaltung der Erfindung reduziert vorteilhaft die Anzahl der Schaltvorgänge und damit die Schaltverluste beim Schalten der Phasen.

Eine weitere Ausgestaltung der Erfindung sieht vor, dass für jeden der weiteren Wechselrichter die Auswahl der beiden Phasenströme, aus denen der Iststromraumzeiger gebildet wird, in Abhängigkeit von einer Phasenlage der benötigten Ausgangsspannungen variiert wird. Beispielsweise wird für jeden der weiteren Wechselrichter als diejenige Phase, deren Phasenstrom nicht zur Bildung des Iststromraumzeigers verwendet wird, die Phase mit der betragsmäßig größten Ausgangsspannung des Wechselrichters gewählt. Diese Ausgestaltungen der Erfindung koppeln also die Auswahl der zur Bildung des Iststromraumzeigers verwendeten Phasen eines weiteren Wechselrichters jeweils an die Phasenlage der Ausgangsspannungen des Wechselrichters. Dadurch können insbesondere bei annähernd gleicher Phasenlage von Ausgangsströmen und Ausgangsspannungen Schaltverluste weiter reduziert werden, da jeweils die Phase mit der momentan höchsten Stromstärke nicht geschaltet wird.

Eine weitere Ausgestaltung der Erfindung sieht vor, dass für alle Wechselrichter zu jedem Zeitpunkt derselbe Sollstromraumzeiger verwendet wird. Dadurch werden vorteilhaft die Wechselrichter gleichmäßig belastet und die Stromregelung weiter vereinfacht.

Eine weitere Ausgestaltung der Erfindung sieht vor, dass jeder Iststromraumzeiger und jeder Sollstromraumzeiger in einem statorfesten Koordinatensystem gebildet werden. Dabei wird der Iststromraumzeiger des ersten Wechselrichters beispielsweise gemäß

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

gebildet, wobei $i_{U\_WR1}$, $i_{V\_WR1}$, $i_{W\_WR1}$ die Phasenströme (genauer: Istwerte der Phasenströme) des ersten Wechselrichters bezeichnen. Der Iststromraumzeiger jedes weiteren Wechselrichters wird in Abhängigkeit von den für seine Bildung ausgewählten Phasenströmen beispielsweise gemäß

$$\begin{pmatrix} i_{\alpha\_WR2} \\ i_{\beta\_WR2} \\ i_{0\_WR2} \end{pmatrix}^{*} = \frac{1}{3}\begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{**} = \frac{1}{3}\begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{***} = \frac{1}{3}\begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

gebildet, wobei $i_{U\_WR2}$, $i_{V\_WR2}$, $i_{W\_WR2}$ die Phasenströme (genauer: Istwerte der Phasenströme) eines weiteren Wechselrichters bezeichnen. Diese Ausgestaltungen der Erfindung realisieren die oben genannte vorteilhafte Bildung der Iststromraumzeiger der Wechselrichter konkret durch so genannte Clarke-Transformationen der Istwerte der Phasenströme.

Eine weitere Ausgestaltung der Erfindung sieht vor, dass als Hysteresestromregelung eine SDHC-Stromregelung verwendet wird. Unter einer so genannten SDHC-Stromregelung (SDHC = Switched Diamond Hysteresis Control) wird ein Stromregelungsverfahren verstanden, das in H. Wießmann, Hochdynamisches direktes Stromregelverfahren für Pulswechselrichter im Vergleich zu PWM-Verfahren, ISBN 978-3843904759, Verlag Dr. Hut 2012 veröffentlicht wurde. Bei einem SDHC-Verfahren werden zur Stromregelung eines Umrichters zu jedem Zeitpunkt vier benachbarte Raumzeiger verwendet, deren Spitzen eine Raute bilden. Das SDHC-Verfahren verbindet vorteilhaft die hohe Dynamik und Robustheit einer direkten Hysteresestromregelung mit dem hervorragenden stationären Verhalten eines raumzeigermodulierten Umrichters.

Eine erfindungsgemäße Regelungsvorrichtung zur Regelung von Phasenströmen mehrerer parallel geschalteter dreiphasiger Wechselrichter umfasst für jeden Wechselrichter eine Strommessvorrichtung zur Erfassung von Istwerten der Phasenströme des Wechselrichters und für jeden Wechselrichter eine Hysteresestromregelvorrichtung, wobei die Hysteresestromregelvorrichtungen dazu konfiguriert sind, die Phasenströme der Wechselrichter anhand der von den Strommessvorrichtungen erfassten Istwerte der Phasenströme gemäß dem erfindungsgemäßen Verfahren zu regeln. Die Vorteile einer derartigen Regelungsvorrichtung ergeben sich aus den oben genannten Vorteilen des erfindungsgemäßen Verfahrens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:

FIG 1   ein Ersatzschaltbild zweier parallel geschalteter Wechselrichter, und

FIG 2   einen Schaltplan eines Ausführungsbeispiels zweier parallel geschalteter Wechselrichter und einer Regelungsvorrichtung zur Regelung von Phasenströmen der Wechselrichter.

Einander entsprechende Teile sind in den Figuren mit denselben Bezugszeichen versehen.

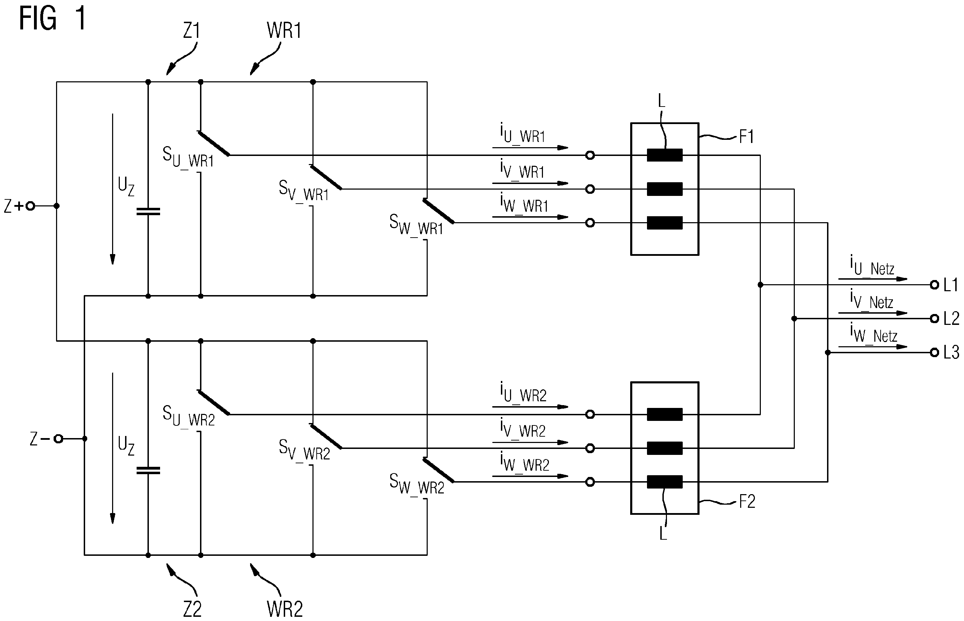

FIG 1 zeigt ein Ersatzschaltbild zweier parallel geschalteter dreiphasiger Wechselrichter WR1, WR2.
Jeder Wechselrichter WR1, WR2 weist eingangsseitig einen Gleichspannungszwischenkreis Z1, Z2 mit einem positiven Zwischenkreispotential Z+, einem negativen Zwischenkreispotential Z- und einer Zwischenkreisspannung $U_Z$, die die Differenz dieser Zwischenkreispotentiale Z+, Z- ist, auf. Die Gleichspannungszwischenkreise Z1, Z2 der Wechselrichter WR1, WR2 sind parallel geschaltet, so dass sie dasselbe positive Zwischenkreispotential Z+, dasselbe negative Zwischenkreispotential Z- und dieselbe Zwischenkreisspannung $U_Z$ aufweisen.
Ferner umfasst jeder Wechselrichter WR1, WR2 für jede seiner Phasen einen Schalter $S_{U\_WR1}$, $S_{V\_WR1}$,

$S_{W\_WR1}$, $S_{U\_WR2}$, $S_{V\_WR2}$, $S_{W\_WR2}$ mit einem ersten Schaltzustand, der ein Phasenpotential der Phase auf das positive Zwischenkreispotential Z+ legt, und einem zweiten Schaltzustand, der das Phasenpotential der Phase auf das negative Zwischenkreispotential Z- legt. Eine Änderung des Schaltzustands des Schalters $S_{U\_WR1}$, $S_{V\_WR1}$, $S_{W\_WR1}$, $S_{U\_WR2}$, $S_{V\_WR2}$, $S_{W\_WR2}$ einer Phase wird hier als Schalten der Phase bezeichnet.

Jeder Wechselrichter WR1, WR2 ist ausgangsseitig über einen eigenen Filter F1, F2 an ein Netz gekoppelt. Die Filter F1, F2 weisen jeweils für jede Phase des jeweiligen Wechselrichters WR1, WR2 mindestens eine Induktivität L auf. Die beiden zueinander korrespondierenden Phasen der beiden Wechselrichter WR1, WR2 sind ausgangsseitig zusammengeschaltet und mit einer gemeinsamen netzseitigen Anschlussklemme L1, L2, L3 verbunden, so dass sich die beiden Phasenströme $i_{U\_WR1}$, $i_{V\_WR1}$, $i_{W\_WR1}$, $i_{U\_WR2}$, $i_{V\_WR2}$, $i_{W\_WR2}$ dieser Phasen der beiden Wechselrichter WR1, WR2 zu einem Phasennetzstrom $i_{U\_Netz}$, $i_{V\_Netz}$, $i_{W\_Netz}$ addieren, der über die mit diesen Phasen verbundene Anschlussklemme L1, L2, L3 ausgegeben wird.

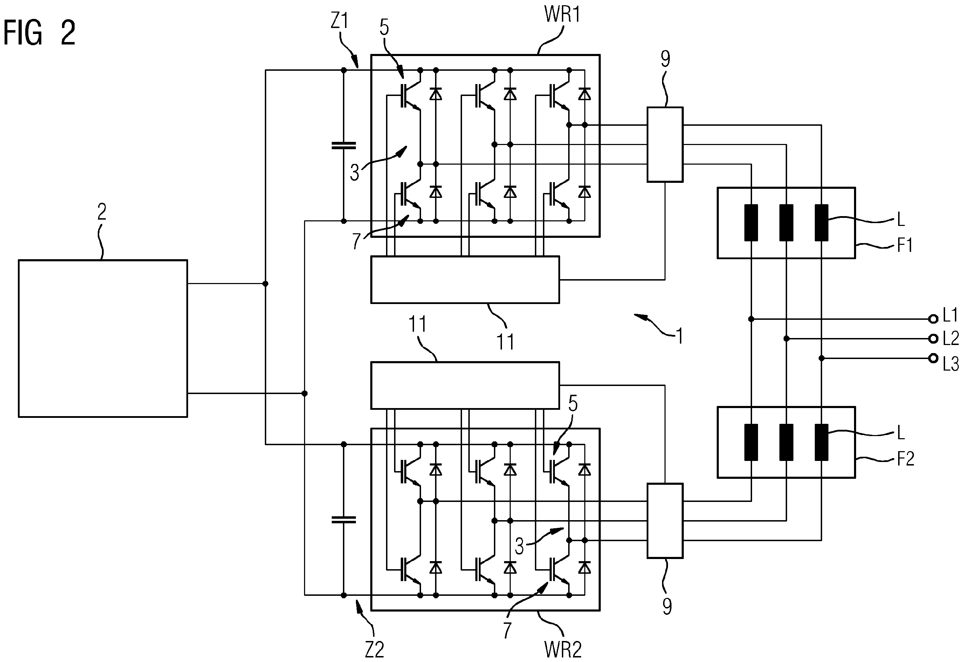

FIG 2 zeigt einen Schaltplan eines konkreten Ausführungsbeispiels zweier gemäß FIG 1 parallel geschalteter dreiphasiger Wechselrichter WR1, WR2 sowie einer Regelungsvorrichtung 1 zur Regelung der Phasenströme $i_{U\_WR1}$, $i_{V\_WR1}$, $i_{W\_WR1}$, $i_{U\_WR2}$, $i_{V\_WR2}$, $i_{W\_WR2}$ der Wechselrichter WR1, WR2 und einer eingangsseitig an die Gleichspannungszwischenkreise Z1, Z2 der Wechselrichter WR1, WR2 angeschlossenen Last 2.

Die Schalter $S_{U\_WR1}$, $S_{V\_WR1}$, $S_{W\_WR1}$, $S_{U\_WR2}$, $S_{V\_WR2}$, $S_{W\_WR2}$ sind jeweils als eine Schalteinheit ausgeführt, die eine Halbbrücke 3 mit einem ersten Schaltelement 5 und einem zweiten Schaltelement 7 aufweist. Die Schaltelemente 5, 7 sind beispielsweise jeweils als ein Bipolartransistor mit isolierter Gate-Elektrode (IGBT = Insulated-Gate Bipolar Transistor) ausgeführt. Der erste Schaltzustand jedes Schalters $S_{U\_WR1}$, $S_{V\_WR1}$, $S_{W\_WR1}$, $S_{U\_WR2}$, $S_{V\_WR2}$, $S_{W\_WR2}$ wird durch Schließen des ersten Schaltelements 5 und Öffnen des zweiten Schaltelements 7 hergestellt, der zweite Schaltzustand wird durch Öffnen des ersten Schaltelements 5 und Schließen des zweiten Schaltelements 7 hergestellt.

Die Regelungsvorrichtung 1 umfasst für jeden Wechselrichter WR1, WR2 eine Strommessvorrichtung 9 zur Erfassung der Istwerte der Phasenströme $i_{U\_WR1}$, $i_{V\_WR1}$, $i_{W\_WR1}$, $i_{U\_WR2}$, $i_{V\_WR2}$, $i_{W\_WR2}$ des Wechselrichters WR1, WR2 und eine Hysteresestromregelvorrichtung 11, mit der aus den erfassten Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ in unten näher beschriebener Weise Schaltsignale für die Phasen des Wechselrichters WR1, WR2 erzeugt werden, mit denen die Schalter $S_{U\_WR1}$, $S_{V\_WR1}$, $S_{W\_WR1}$, $S_{U\_WR2}$, $S_{V\_WR2}$, $S_{W\_WR2}$, d. h. in dem in Figur 2 dargestellten Ausführungsbeispiel die Schaltelemente 5, 7 angesteuert werden.

Die Phasenströme $i_{U\_WR1}$, $i_{V\_WR1}$, $i_{W\_WR1}$, $i_{U\_WR2}$, $i_{V\_WR2}$, $i_{W\_WR2}$ jedes Wechselrichters WR1, WR2 werden durch die jeweilige Hysteresestromregelvorrichtung 11 mit einer direkten Hysteresestromregelung unabhängig von den Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ des jeweils anderen Wechselrichters WR1, WR2 geregelt. Dabei wird aus den von der Strommessvorrichtung 9 erfassten Istwerten der Phasenströme $i_{U\_WR1}$, $i_{V\_WR1}$, $i_{W\_WR1}$, $i_{U\_WR2}$, $i_{V\_WR2}$, $i_{W\_WR2}$ jedes Wechselrichters WR1, WR2 in unten näher beschriebener Weise in einem statorfesten Koordinatensystem ein Iststromraumzeiger gebildet. Der Iststromraumzeiger wird innerhalb eines Hysteresefensters um einen Sollstromraumzeiger gehalten. Für beide Wechselrichter WR1, WR2 wird beispielsweise zu jedem Zeitpunkt derselbe Sollstromraumzeiger verwendet.

Ferner wird eine Hysteresestromregelung mit einem einer Flat-Top-Modulation vergleichbaren Verhalten verwendet, bei der in jeder Taktperiode der Regelung eine Phase jedes Wechselrichters WR1, WR2 nicht geschaltet wird. Vorzugsweise ist dies jeweils die Phase, deren Ausgangsspannung die momentan betragsmäßig größte Ausgangsspannung des jeweiligen Wechselrichters WR1, WR2 ist. Dadurch wird das statorfeste Koordinatensystem in Sektoren von jeweils 60 Grad aufgeteilt, wobei in einander benachbarten Sektoren jeweils eine andere Phase nicht geschaltet wird.

Vorzugsweise wird als Hysteresestromregelung eine SDHC-Stromregelung verwendet.

Der Iststromraumzeiger eines ersten Wechselrichters WR1 wird aus den Stromstärken aller drei Phasenströme $i_{U\_WR1}$, $i_{V\_WR1}$, $i_{W\_WR1}$ des ersten Wechselrichters WR1 gemäß folgender Gleichung [1] gebildet, die eine herkömmliche Clarke-Transformation ist, wobei $i_{O\_WR1}$ den Nullsystemstrom des ersten Wechselrichters WR1 bezeichnet:

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}. \qquad [1]$$

Der Iststromraumzeiger des zweiten Wechselrichters WR2 wird im Unterschied dazu zu jedem Zeitpunkt aus nur genau zwei der drei Phasenströme $i_{U\_WR2}$, $i_{V\_WR2}$, $i_{W\_WR2}$ des zweiten Wechselrichters WR2 gemäß einer der folgenden Gleichungen [2] bis [4] gebildet:

$$\begin{pmatrix} i_{\alpha\_WR2} \\ i_{\beta\_WR2} \\ i_{0\_WR2} \end{pmatrix}^{*} = \frac{1}{3} \begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}, \qquad [2]$$

$$\begin{pmatrix} i_{\alpha\_WR2} \\ i_{\beta\_WR2} \\ i_{0\_WR2} \end{pmatrix}^{**} = \frac{1}{3} \begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}, \qquad [3]$$

$$\begin{pmatrix} i_{\alpha\_WR2} \\ i_{\beta\_WR2} \\ i_{0\_WR2} \end{pmatrix}^{***} = \frac{1}{3} \begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}, \qquad [4]$$

wobei die jeweils gewählte Gleichung der Gleichungen [2] bis [4] variiert, d. h. zu aufeinander folgenden Zeitpunkten gewechselt wird. Jede der Gleichungen [2] bis [4] ist eine Clarke-Transformation, bei der jeweils ein Phasenstrom $i_{U\_WR2}$, $i_{V\_WR2}$, $i_{W\_WR2}$ aus den beiden anderen Phasenströmen $i_{U\_WR2}$, $i_{V\_WR2}$, $i_{W\_WR2}$ des zweiten Wechselrichters WR2 unter der Annahme berechnet wurde, dass sich die drei Phasenströme $i_{U\_WR2}$, $i_{V\_WR2}$, $i_{W\_WR2}$ zu Null addieren, d. h. unter Annahme, dass der Nullsystemstrom des zweiten Wechselrichters WR2 verschwindet, obwohl dies im allgemeinen tatsächlich nicht der Fall ist.

Bei der Bildung des Iststromraumzeigers des zweiten Wechselrichters WR2 gemäß einer der Gleichungen [2] bis [4] wird also jeweils einer der Phasenströme $i_{U\_WR2}$, $i_{V\_WR2}$, $i_{W\_WR2}$ nicht verwendet, d. h. der Iststromraumzeiger des zweiten Wechselrichters WR2 wird jeweils nur aus den Istwerten der beiden anderen Phasenströme $i_{U\_WR2}$, $i_{V\_WR2}$, $i_{W\_WR2}$ gebildet. In Gleichung [2] wird der Phasenstrom $i_{W\_WR2}$ nicht zur Bildung des Iststromraumzeigers verwendet, in Gleichung [3] der Phasenstrom $i_{U\_WR2}$ und in Gleichung [4] der Phasenstrom $i_{V\_WR2}$.

Vorzugsweise wird jeweils derjenige Phasenstrom $i_{U\_WR2}$, $i_{V\_WR2}$, $i_{W\_WR2}$ zur Bildung des Iststromraumzeigers des zweiten Wechselrichters WR2 nicht verwendet, dessen Phase momentan gemäß der Flat-Top-Modulation nicht geschaltet wird. Wenn diese Phase entsprechend einer oben genannten bevorzugten Ausführung immer diejenige Phase ist, deren Phasenstrom $i_{U\_WR2}$, $i_{V\_WR2}$, $i_{W\_WR2}$ der momentan betragsmäßig größte Phasenstrom $i_{U\_WR2}$, $i_{V\_WR2}$, $i_{W\_WR2}$ des zweiten Wechselrichters WR2 ist, wird das statorfeste Koordinatensystem in Sektoren von jeweils 60 Grad aufgeteilt, wobei in einander benachbarten Sektoren jeweils eine andere der Gleichungen [2] bis [4] zur Bildung des Iststromraumzeigers des zweiten Wechselrichters WR2 verwendet wird.

Durch die Bildung des Iststromraumzeigers des zweiten Wechselrichters WR2 gemäß einer der Gleichungen [2] bis [4] werden die beiden Phasenströme $i_{U\_WR2}$, $i_{V\_WR2}$, $i_{W\_WR2}$ aus denen der Iststromraumzeiger jeweils gebildet wird, auf ihre Sollwerte geregelt, auch wenn ein Nullsystemstrom des zweiten Wechselrichters WR2 nicht verschwindet. Der jeweilige dritte Phasenstrom $i_{U\_WR2}$, $i_{V\_WR2}$, $i_{W\_WR2}$ wird zwar bei einem nicht verschwindenden Nullsystemstrom des zweiten Wechselrichters WR2 nicht auf seinen Sollwert geregelt. Jedoch wird durch das permanente Wechseln derjenigen Phasenströme $i_{U\_WR2}$, $i_{V\_WR2}$, $i_{W\_WR2}$ aus denen der Iststromraumzeiger des zweiten Wechselrichters WR2 jeweils gebildet wird, erreicht, dass alle drei Phasenströme $i_{U\_WR2}$, $i_{V\_WR2}$, $i_{W\_WR2}$ nach einer kurzen Einschwingphase der Regelung wenigstens annähernd (innerhalb des Hysteresefensters) ihren Sollwerten entsprechen. Dadurch wird ein Nullsystemstrom in dem zweiten Wechselrichter WR2 im Wesentlichen eliminiert (abgesehen von einem Nullsystemstrom mit einer Stromstärke im Bereich der Breite des Hysteresefensters). Ein Nullsystemstrom in dem ersten Wechselrichter WR1 wird zwar nicht aktiv ausgeregelt, führt jedoch aufgrund der Regelung des zweiten Wechselrichters WR2 nicht zu einem Kreisstrom zwischen dem ersten Wechselrichter WR1 und dem zweiten Wechselrichter WR2. Diese Eigenschaften der erfindungsgemäßen Regelung werden im Folgenden detailliert.

Unter der Annahme, dass die Regelungen beider Wechselrichter WR1, WR2 eingeschwungen sind, d. h. dass im Mittel die $\alpha$- und $\beta$-Komponenten der berechneten Iststromraumzeiger den entsprechenden Komponenten der Sollstromraumzeiger entsprechen, und dass für die Phasen beider Wechselrichter WR1, WR2 jeweils dieselben Stromsollwerte $i_{U\_soll}$, $i_{V\_soll}$, $i_{W\_soll}$ verwendet werden, gelten für die Phasenströme $i_{U\_WR1}$, $i_{V\_WR1}$, $i_{W\_WR1}$ des ersten Wechselrichters WR1 die folgenden Gleichungen [5] bis [7]:

$$i_{U\_WR1} = i_{\alpha\_soll} + i_{0\_WR1} = i_{U\_soll} + i_{0\_WR1}, \qquad [5]$$

$$i_{V\_WR1} = \frac{\sqrt{3}i_{\beta\_soll} - i_{\alpha\_soll}}{2} + i_{0\_WR1} = i_{V\_soll} + i_{0\_WR1},\qquad [6]$$

$$i_{W\_WR1} = \frac{-\sqrt{3}i_{\beta\_soll} - i_{\alpha\_soll}}{2} + i_{0\_WR1} = i_{W\_soll} + i_{0\_WR1}.\qquad [7]$$

Die Istwerte der Phasenströme $i_{U\_WR1}$, $i_{V\_WR1}$, $i_{W\_WR1}$ des ersten Wechselrichters WR1 weichen also von den jeweiligen Stromsollwerten $i_{U\_soll}$, $i_{V\_soll}$, $i_{W\_soll}$ um den Nullsystemstrom $i_{0\_WR1}$ des ersten Wechselrichters WR1 ab.

In dem in FIG 2 dargestellten Ausführungsbeispiel kann über das Netz kein Nullsystemstrom fließen. Es ergibt sich somit der folgende Zusammenhang:

$$i_{U\_Netz} + i_{V\_Netz} + i_{W\_Netz} = 0 = \{i_{U\_WR1} + i_{U\_WR2}\} + \{i_{V\_WR1} + i_{V\_WR2}\} +$$
$$\{i_{W\_WR1} + i_{W\_WR2}\}.\qquad [8]$$

Für den zweiten Wechselrichter WR2 lassen sich ebenso wie für den ersten Wechselrichter WR1 Gleichungen für die Phasenströme $i_{U\_WR2}$, $i_{V\_WR2}$, $i_{W\_WR2}$ aufstellen. Für die folgenden Erläuterungen wird beispielhaft davon ausgegangen, dass der Iststromraumzeigers des zweiten Wechselrichters WR2 gemäß Gleichung [2] gebildet wird. Dann ergeben sich die Phasenströme $i_{U\_WR2}$, $i_{V\_WR2}$ gemäß den folgenden Gleichungen [9] und [10]:

$$i_{U\_WR2} = i_{\acute{a}\_WR2}{}^{*} + i_{0\_WR2}{}^{*} = i_{\alpha\_soll} + 0 = i_{U\_soll},\qquad [9]$$

$$i_{V\_WR2} = \frac{\sqrt{3}i_{\beta\_WR2}{}^{*} - i_{\alpha\_WR2}{}^{*}}{2} + i_{0\_WR2}{}^{*} = \frac{\sqrt{3}i_{\beta\_soll} - i_{\alpha\_soll}}{2} + 0 = i_{V\_soll}.\qquad [10]$$

Dies zeigt, dass die beiden in diesem Fall zur Bildung des Iststromraumzeigers des zweiten Wechselrichters WR2 verwendeten Phasenströme $i_{U\_WR2}$, $i_{V\_WR2}$ auf ihre Stromsollwerte geregelt werden. Der dritte Phasenstrom $i_{W\_WR2}$ wird nicht auf seinen Stromsollwert geregelt. Bei der Aufstellung der Gleichung [2] wurde zwar die Annahme zu Grunde gelegt, dass der Nullsystemstrom des zweiten Wechselrichters WR2 verschwindet ($0 = i_{U\_WR2} + i_{V\_WR2} + i_{W\_WR2}$). Diese Annahme ist aber im Allgemeinen nicht zutreffend und kann somit nicht zur Berechnung und Regelung des Phasenstromes $i_{W\_WR2}$ verwendet werden.

Aus den Gleichungen [5] bis [10] ergibt sich:

$$0 = \{(i_{U\_soll} + i_{0\_WR1}) + i_{U\_soll}\} + \{(i_{V\_soll} + i_{0\_WR1}) + i_{V\_soll}\} + \{(i_{W\_soll} + i_{0\_WR1}) +$$
$$i_{W\_WR2}\}.\qquad [11]$$

Wendet man zusätzlich noch die Knotenregel (z. B. $i_{U\_WR1} + i_{U\_WR2} = i_{U\_Netz}$) auf die einzelnen Phasen an, ergeben sich die folgenden Gleichungen [12] bis [15]:

$$i_{U\_Netz} = 2 * i_{U\_soll} + i_{0\_WR1},\qquad [12]$$

$$i_{V\_Netz} = 2 * i_{V\_soll} + i_{0\_WR1},\qquad [13]$$

$$i_{W\_Netz} = i_{W\_soll} + i_{0\_WR1} + i_{W\_WR2} = 2 * i_{W\_soll} + (i_{0\_WR1} + i_{W\_WR2} - i_{W\_soll}) = 2 *$$
$$i_{W\_soll} - 2 * (i_{0\_WR1}),\qquad [14]$$

$$-\left(i_{W\_WR2} - i_{W\_soll}\right) = -i_{0\_WR2} = 3 * i_{0\_WR1} \, , \qquad\qquad [15]$$

wobei $i_{0\_WR2} = i_{U\_WR2} + i_{V\_WR2} + i_{W\_WR2}$ verwendet wurde.

Aus den Gleichungen [12] bis [15] können nun zwei grundsätzliche Aussagen abgeleitet werden:

- Durch Nullsystemströme der Wechselrichter WR1, WR2 weichen die resultierenden Phasennetzströme $i_{U\_Netz}$, $i_{V\_Netz}$, $i_{W\_Netz}$ von ihren Sollwerten ab.
- Der erste Wechselrichter WR1 weicht in allen drei Phasenströmen $i_{U\_WR1}$, $i_{V\_WR1}$, $i_{W\_WR1}$ um dem gleichen Betrag vom den Stromsollwerten ab. Der zweite Wechselrichter WR2 weicht zu jedem Zeitpunkt nur in einer Phase vom dem Stromsollwert ab, aber mit dreifacher Differenz.

Die obigen Aussagen wurden für den Fall getroffen, dass eine Phase nicht zur Bildung des Iststromraumzeigers des zweiten Wechselrichters WR2 verwendet wird. Analog können die Betrachtungen und Gleichungen auch für eine andere Phase angewendet werden.

Beide Wechselrichter WR1, WR2 haben in derjenigen Phase, die gemäß der Flat-Top-Modulation momentan nicht geschaltet wird, den gleichen Schaltzustand. Somit fällt auch an den beiden Induktivitäten L der entsprechenden Phase eine annähernd gleiche Spannung ab (Bauteilstreuungen, Temperaturunterschiede usw. können zu leichten Unterschieden führen). Dies hat zur Folge, dass sich auch der Phasenstromunterschied zwischen den beiden Wechselrichtern WR1, WR2 in dieser Phase nur minimal ändert. Gemäß den Gleichungen [12] bis [15] bleibt somit auch der Kreisstrom (annähernd) konstant.

Wie oben ausgeführt wurde, wechselt die zur Bildung des Iststromraumzeigers des zweiten Wechselrichters WR2 nicht verwendete Phase permanent. Ein existierter Kreisstrom im zweiten Wechselrichter WR2 vor einem Wechsel befindet sich nach dem Wechsel automatisch in einer "aktiven" Phase, d. h. in einer Phase, die zur Bildung des Iststromraumzeigers des zweiten Wechselrichters WR2 verwendet wird, und wird daher nach dem Wechsel direkt von der Regelung ausgeregelt. Derjenige Phasenstrom $i_{U\_WR2}$, $i_{V\_WR2}$, $i_{W\_WR2}$ der nach dem Wechsel nicht zur Bildung des Iststromraumzeigers des zweiten Wechselrichters WR2 verwendet wird, nimmt vor dem Wechsel (bei eingeschwungener Regelung) annähernd seinen Stromsollwert an. Da jedoch nur der Mittelwert des Phasenstroms $i_{U\_WR2}$, $i_{V\_WR2}$, $i_{W\_WR2}$ dem Stromsollwert entspricht und der Zeitpunkt des Wechsels nicht bekannt ist, kann ein Kreisstrom mit einer Stromstärke im Bereich der Hysteresebreite der Regelung entstehen. Ein existierender Kreisstrom bleibt also bei eingeschwungener Regelung zwischen zwei Wechseln derjenigen Phase, die zur Bildung des Iststromraumzeigers des zweiten Wechselrichters WR2 nicht verwendet wird, annähernd konstant und wird durch den Wechsel dieser Phase ausgeregelt.

Die oben beispielhaft für zwei Wechselrichter WR1, WR2 beschriebene Regelung wird analog für mehr als zwei parallel geschaltete dreiphasige Wechselrichter WR1, WR2 angewendet, wobei einer der Wechselrichter WR1, WR2 wie der erste Wechselrichter WR1 der oben beschriebenen Regelung geregelt wird und jeder weitere Wechselrichter WR1, WR2 wie der zweite Wechselrichter WR2 der oben beschriebenen Regelung geregelt wird.

Die oben beschriebene Stromregelung kann ferner in analoger Weise statt für Zwei-Level-Wechselrichter, deren Schalter $S_{U\_WR1}$, $S_{V\_WR1}$, $S_{W\_WR1}$, $S_{U\_WR2}$, $S_{V\_WR2}$, $S_{W\_WR2}$ nur zwei Schaltzustände aufweisen, auch für Multi-Level-Wechselrichter, deren Schalter $S_{U\_WR1}$, $S_{V\_WR1}$, $S_{W\_WR1}$, $S_{U\_WR2}$, $S_{V\_WR2}$, $S_{W\_WR2}$ mehr als zwei Schaltzustände aufweisen, verwendet werden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Verfahren zur Regelung von Phasenströmen ($i_{U\_WR1}$, $i_{V\_WR1}$, $i_{W\_WR1}$, $i_{U\_WR2}$, $i_{V\_WR2}$, $i_{W\_WR2}$) mehrerer parallel geschalteter dreiphasiger Wechselrichter (WR1, WR2), wobei

   - die Phasenströme ($i_{U\_WR1}$, $i_{V\_WR1}$, $i_{W\_WR1}$, $i_{U\_WR2}$, $i_{V\_WR2}$, $i_{W\_WR2}$) jedes Wechselrichters (WR1, WR2) mit einer direkten Hysteresestromregelung geregelt werden,
   - wobei ein Iststromraumzeiger für Istwerte der Phasenströme ($i_{U\_WR1}$, $i_{V\_WR1}$, $i_{W\_WR1}$, $i_{U\_WR2}$, $i_{V\_WR2}$, $i_{W\_WR2}$) des Wechselrichters (WR1, WR2) innerhalb eines Hysteresefensters um einen Sollstromraumzeiger gehalten wird,
   - der Iststromraumzeiger eines ersten Wechselrichters (WR1) aus allen drei Phasenströmen ($i_{U\_WR1}$, $i_{V\_WR1}$, $i_{W\_WR1}$) des ersten Wechselrichters (WR1) gebildet wird,

- der Iststromraumzeiger jedes weiteren Wechselrichters (WR2) aus genau zwei Phasenströmen ($i_{U\_WR2}$, $i_{V\_WR2}$, $i_{W\_WR2}$) des Wechselrichters (WR2) unter der Annahme gebildet wird, dass sich alle drei Phasenströme ($i_{U\_WR2}$, $i_{V\_WR2}$, $i_{W\_WR2}$) des Wechselrichters (WR2) zu Null addieren, wobei die Auswahl der beiden Phasenströme ($i_{U\_WR2}$, $i_{V\_WR2}$, $i_{W\_WR2}$), aus denen der Iststromraumzeiger gebildet wird, variiert wird,

- und für jeden der weiteren Wechselrichter (WR2) diejenige Phase, deren Phasenstrom ($i_{U\_WR2}$, $i_{V\_WR2}$, $i_{W\_WR2}$) nicht zur Bildung des Iststromraumzeigers verwendet wird, nicht geschaltet wird.

2. Verfahren nach Anspruch 1,
   **dadurch gekennzeichnet, dass** die Phasenströme ($i_{U\_WR1}$, $i_{V\_WR1}$, $i_{W\_WR1}$, $i_{U\_WR2}$, $i_{V\_WR2}$, $i_{W\_WR2}$) jedes Wechselrichters (WR1, WR2) unabhängig von den Istwerten der Phasenströme ($i_{U\_WR1}$, $i_{V\_WR1}$, $i_{W\_WR1}$, $i_{U\_WR2}$, $i_{V\_WR2}$, $i_{W\_WR2}$) der anderen Wechselrichter (WR1, WR2) geregelt werden.

3. Verfahren nach einem der vorhergehenden Ansprüche,
   **dadurch gekennzeichnet, dass** für jeden der weiteren Wechselrichter (WR2) die Auswahl der beiden Phasenströme ($i_{U\_WR2}$, $i_{V\_WR2}$, $i_{W\_WR2}$), aus denen der Iststromraumzeiger gebildet wird, in Abhängigkeit von einer Phasenlage von Ausgangsspannungen des Wechselrichters (WR2) variiert wird.

4. Verfahren nach einem der vorhergehenden Ansprüche,
   **dadurch gekennzeichnet, dass** für jeden der weiteren Wechselrichter (WR2) als diejenigen Phase, deren Phasenstrom ($i_{U\_WR2}$, $i_{V\_WR2}$, $i_{W\_WR2}$) nicht zur Bildung des Iststromraumzeigers verwendet wird, die Phase mit der betragsmäßig größten Ausgangsspannung des Wechselrichters (WR2) gewählt wird.

5. Verfahren nach einem der vorhergehenden Ansprüche,
   **dadurch gekennzeichnet, dass** für alle Wechselrichter (WR1, WR2) zu jedem Zeitpunkt derselbe Sollstromraumzeiger verwendet wird.

6. Verfahren nach einem der vorhergehenden Ansprüche,
   **dadurch gekennzeichnet, dass** jeder Iststromraumzeiger und jeder Sollstromraumzeiger in einem statorfesten Koordinatensystem gebildet werden.

7. Verfahren nach Anspruch 6,
   **dadurch gekennzeichnet, dass** der Iststromraumzeiger des ersten Wechselrichters (WR1) gemäß

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

gebildet wird.

8. Verfahren nach Anspruch 6 oder 7,
   **dadurch gekennzeichnet, dass** der Iststromraumzeiger jedes weiteren Wechselrichters (WR2) in Abhängigkeit von den für seine Bildung ausgewählten Phasenströmen ($i_{U\_WR2}$, $i_{V\_WR2}$, $i_{W\_WR2}$) gemäß

$$\begin{pmatrix} i_{\alpha\_WR2} \\ i_{\beta\_WR2} \\ i_{0\_WR2} \end{pmatrix}^{*} = \frac{1}{3} \begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{**} = \frac{1}{3} \begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

oder gemäß

$$\begin{pmatrix} i_{\alpha\_WR2} \\ i_{\beta\_WR2} \\ i_{0\_WR2} \end{pmatrix}^{***} = \frac{1}{3} \begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

gebildet wird.

9. Verfahren nach einem der vorhergehenden Ansprüche, **dadurch gekennzeichnet, dass** als Hysteresestromregelung eine SDHC-Stromregelung verwendet wird.

10. Verfahren nach einem der vorhergehenden Ansprüche, **dadurch gekennzeichnet, dass** die Wechselrichter (WR1, WR2) wechselspannungsseitig über Filter (F1, F2) und gleichspannungsseitig direkt miteinander verschaltet sind.

11. Regelungsvorrichtung (1) zur Regelung von Phasenströmen ($i_{U\_WR1}$, $i_{V\_WR1}$, $i_{W\_WR1}$, $i_{U\_WR2}$, $i_{V\_WR2}$, $i_{W\_WR2}$) mehrerer parallel geschalteter dreiphasiger Wechselrichter (WR1, WR2), die Regelungsvorrichtung (1) umfassend

- für jeden Wechselrichter (WR1, WR2) eine Strommessvorrichtung (9) zur Erfassung von Istwerten der Phasenströme ($i_{U\_WR1}$, $i_{V\_WR1}$, $i_{W\_WR1}$, $i_{U\_WR2}$, $i_{V\_WR2}$, $i_{W\_WR2}$) des Wechselrichters (WR1, WR2) und
- für jeden Wechselrichter (WR1, WR2) eine Hysteresestromregelvorrichtung (11), wobei die Hysteresestromregelvorrichtungen (11) dazu konfiguriert sind, die Phasenströme ($i_{U\_WR1}$, $i_{V\_WR1}$, $i_{W\_WR1}$, $i_{U\_WR2}$, $i_{V\_WR2}$, $i_{W\_WR2}$) der Wechselrichter (WR1, WR2) anhand der von den Strommessvorrichtungen (9) erfassten Istwerte der Phasenströme ($i_{U\_WR1}$, $i_{V\_WR1}$, $i_{W\_WR1}$, $i_{U\_WR2}$, $i_{V\_WR2}$, $i_{W\_WR2}$) gemäß dem Verfahren nach einem der vorhergehenden Ansprüche zu regeln.

**Claims**

1. Method for controlling phase currents ($i_{U\_WR1}$, $i_{V\_WR1}$, $i_{W\_WR1}$, $i_{U\_WR2}$, $i_{V\_WR2}$, $i_{W\_WR2}$) of a number of three-phase inverters (WR1, WR2) connected in parallel, wherein

- the phase currents ($i_{U\_WR1}$, $i_{V\_WR1}$, $i_{W\_WR1}$, $i_{U\_WR2}$, $i_{V\_WR2}$, $i_{W\_WR2}$) of each inverter (WR1, WR2) are controlled with a direct hysteresis current control,
- wherein an actual current space vector for actual values of the phase currents ($i_{U\_WR1}$, $i_{V\_WR1}$, $i_{W\_WR1}$, $i_{U\_WR2}$, $i_{V\_WR2}$, $i_{W\_WR2}$) of the inverter (WR1, WR2) is held within a hysteresis window about a target current space vector,
- the actual current space vector of a first inverter (WR1) is formed from all three phase currents ($i_{U\_WR1}$, $i_{V\_WR1}$, $i_{W\_WR1}$) of the first inverter (WR1),
- the actual current space vector of each further inverter (WR2) is formed from exactly two phase currents ($i_{U\_WR2}$, $i_{V\_WR2}$, $i_{W\_WR2}$) of the inverter (WR2) while assuming that all three phase currents ($i_{U\_WR2}$, $i_{V\_WR2}$, $i_{W\_WR2}$) of the inverter (WR2) add up to zero, the selection of the two phase currents ($i_{U\_WR2}$, $i_{V\_WR2}$, $i_{W\_WR2}$) from which the actual - current space vector is formed being varied,
- and that phase, the phase current ($i_{U\_WR2}$, $i_{V\_WR2}$, $i_{W\_WR2}$) of which is not used to form the actual current space vector, is not switched for each of the further inverters (WR2).

2. Method according to claim 1,
**characterised in that** the phase currents ($i_{U\_WR1}$, $i_{V\_WR1}$, $i_{W\_WR1}$, $i_{U\_WR2}$, $i_{V\_WR2}$, $i_{W\_WR2}$) of each inverter (WR1, WR2) are controlled independently of the actual values of the phase currents ($i_{U\_WR1}$, $i_{V\_WR1}$, $i_{W\_WR1}$, $i_{U\_WR2}$, $i_{V\_WR2}$, $i_{W\_WR2}$) of the other inverters (WR1, WR2).

3. Method according to one of the preceding claims,
**characterised in that** for each of the further inverters (WR2) the selection of the two phase currents ($i_{U\_WR2}$, $i_{V\_WR2}$, $i_{W\_WR2}$), from which the actual current space vector is formed is varied as a function of a phasing of the output voltages of the inverter (WR2).

4. Method according to one of the preceding claims,
**characterised in that** the phase with the largest output voltage of the inverter (WR2), according to amount, is selected for each of the further inverters (WR2) as that phase the phase current of which ($i_{U\_WR2}$, $i_{V\_WR2}$, $i_{W\_WR2}$) is not used to form the actual current space vector.

5. Method according to one of the preceding claims,
   **characterised in that** the same target current space vector is used for all inverters (WR1, WR2) at each time instant.

6. Method according to one of the preceding claims,
   **characterised in that** each actual current space vector and each target current space vector is formed in a fixed stator coordinate system.

7. Method according to claim 6,
   **characterised in that** the actual current space vector of the first inverter (WR1) is formed according to

$$\begin{pmatrix} i_{\alpha\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} * \begin{pmatrix} i_{U\_WR1} \\ i_{V\_WR1} \\ i_{W\_WR1} \end{pmatrix}$$

8. Method according to claim 6 or 7,
   **characterised in that** the actual current space vector of each further inverter (WR2) is formed as a function of the phase currents ($i_{U\_WR2}$, $i_{V\_WR2}$, $i_{W\_WR2}$) selected for its formation according to

$$\begin{pmatrix} i_{\alpha\_WR2} \\ i_{\beta\_WR2} \\ i_{0\_WR2} \end{pmatrix}^{*} = \frac{1}{3} \begin{pmatrix} 3 & 0 & 0 \\ \sqrt{3} & 2\sqrt{3} & 0 \\ 0 & 0 & 0 \end{pmatrix} * \begin{pmatrix} i_{U\_WR2} \\ i_{V\_WR2} \\ i_{W\_WR2} \end{pmatrix}$$

or according to

$$\begin{pmatrix} i_{\alpha\_WR2} \\ i_{\beta\_WR2} \\ i_{0\_WR2} \end{pmatrix}^{**} = \frac{1}{3} \begin{pmatrix} 0 & -3 & -3 \\ 0 & \sqrt{3} & -\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

or according to

$$\begin{pmatrix} i_{\alpha\_WR2} \\ i_{\beta\_WR2} \\ i_{0\_WR2} \end{pmatrix}^{***} = \frac{1}{3} \begin{pmatrix} 3 & 0 & 0 \\ -\sqrt{3} & 0 & -2\sqrt{3} \\ 0 & 0 & 0 \end{pmatrix} * \begin{pmatrix} i_{U\_WR2} \\ i_{V\_WR2} \\ i_{W\_WR2} \end{pmatrix}$$

9. Method according to one of the preceding claims,
   **characterised in that** an SDHC current control is used as a hysteresis current control.

10. Method according to one of the preceding claims,
    **characterised in that** the inverters (WR1, WR2) are interconnected on the alternating voltage side by way of filters (F1, F2) and on the direct voltage side directly with one another.

11. Control device (1) for controlling phase currents ($i_{U\_WR1}$, $i_{V\_WR1}$, $i_{W\_WR1}$, $i_{U\_WR2}$, $i_{V\_WR2}$, $i_{W\_WR2}$) of a number of three-phase inverters (WR1, WR2) connected in parallel, the control device (1) comprising:

    - for each inverter (WR1, WR2) a current measuring device (9) for acquiring the actual values of the phase currents ($i_{U\_WR1}$, $i_{V\_WR1}$, $i_{W\_WR1}$, $i_{U\_WR2}$, $i_{V\_WR2}$, $i_{W\_WR2}$) of the inverter (WR1, WR2) and
    - for each inverter (WR1, WR2) a hysteresis current control device (11), wherein the hysteresis current control devices (11) are configured to control the phase currents ($i_{U\_WR1}$, $i_{V\_WR1}$, $i_{W\_WR1}$, $i_{U\_WR2}$, $i_{V\_WR2}$, $i_{W\_WR2}$) of the inverter (WR1, WR2) on the basis of actual values of the phase currents ($i_{U\_WR1}$, $i_{V\_WR1}$, $i_{W\_WR1}$, $i_{U\_WR2}$, $i_{V\_WR2}$, $i_{W\_WR2}$) acquired by the current measuring devices (9) according to the method according to one of the preceding claims.

**Revendications**

1. Procédé de régulation de courants ($i_{U\_WR1}$, $i_{V\_WR1}$, $i_{W\_WR1}$, $i_{U\_WR2}$, $i_{V\_WR2}$, $i_{W\_WR2}$) de phase de plusieurs onduleurs (WR1, WR2) triphasés montés en parallèle, dans lequel

   - on régule les courants ($i_{U\_WR1}$, $i_{V\_WR1}$, $i_{W\_WR1}$, $i_{U\_WR2}$, $i_{V\_WR2}$, $i_{W\_WR2}$) de phase de chaque onduleur (WR1, WR2) par une régulation de courant d'hystérésis directe,
   - dabs lequel on maintient un vecteur d'espace de courant réel pour des valeurs réelles des courants ($i_{U\_WR1}$, $i_{V\_WR1}$, $i_{W\_WR1}$, $i_{U\_WR2}$, $i_{V\_WR2}$, $i_{W\_WR2}$) de phase de l'onduleur (WR1, WR2) dans une fenêtre d'hystérésis autour d'un vecteur d'espace de courant de consigne,
   - on forme le vecteur d'espace de courant réel d'un premier onduleur (WR1) à partir de tous les trois courants ($i_{U\_WR1}$, $i_{V\_WR1}$, $i_{W\_WR1}$) de phase du premier onduleur (WR1),
   - on forme le vecteur d'espace de courant réel de chaque autre onduleur (WR2) à partir d'exactement deux courants ($i_{U\_WR2}$, $i_{V\_WR2}$, $i_{W\_WR2}$) de phase de l'onduleur (WR2) en supposant que tous les trois courants ($i_{U\_WR2}$, $i_{V\_WR2}$, $i_{W\_WR2}$) de phase de l'onduleur (WR2) s'additionnent à zéro, dans lequel on fait varier le choix des deux courants ($i_{U\_WR2}$, $i_{V\_WR2}$, $i_{W\_WR2}$) de phase à partir desquels on forme le vecteur d'espace de courant réel,
   - et pour chacun des autres onduleurs (WR2), on ne branche pas la phase, dont le courant ($i_{U\_WR2}$, $i_{V\_WR2}$, $i_{W\_WR2}$) de phase n'est pas utilisé pour former le vecteur d'espace de courant réel.

2. Procédé suivant la revendication 1,
   **caractérisé en ce que** l'on régule les courants ($i_{U\_WR1}$, $i_{V\_WR1}$, $i_{W\_WR1}$, $i_{U\_WR2}$, $i_{V\_WR2}$, $i_{W\_WR2}$) de phase de chaque onduleur (WR1, WR2), indépendamment des valeurs réelles des courants ($i_{U\_WR1}$, $i_{V\_WR1}$, $i_{W\_WR1}$, $i_{U\_WR2}$, $i_{V\_WR2}$, $i_{W\_WR2}$) de phase des autres onduleurs (WR1, WR2).

3. Procédé suivant l'une des revendications précédentes,
   **caractérisé en ce que**, pour chacun des autres onduleurs (WR2), on fait varier le choix des deux courants ($i_{U\_WR2}$, $i_{V\_WR2}$, $i_{W\_WR2}$) de phase à partir desquels on forme le vecteur d'espace de courant réel en fonction d'une position en phase de tensions de sortie de l'onduleur (WR2).

4. Procédé suivant l'une des revendications précédentes,
   **caractérisé en ce que**, pour chacun des autres onduleurs (WR2), on choisit comme phase, dont le courant ($i_{U\_WR2}$, $i_{V\_WR2}$, $i_{W\_WR2}$) de phase n'est pas utilisé pour former le vecteur d'espace de courant réel, la phase ayant la tension de sortie la plus grande en valeur absolue de l'onduleur (WR2).

5. Procédé suivant l'une des revendications précédentes,
   **caractérisé en ce que** l'on utilise, pour tous les onduleurs (WR1, WR2), à un instant, le même vecteur d'espace de courant de consigne.

6. Procédé suivant l'une des revendications précédentes,
   **caractérisé en ce que** l'on forme chaque vecteur d'espace de courant réel et chaque vecteur d'espace de courant de consigne dans un système de coordonnées fixe par rapport au stator.

7. Procédé suivant la revendication 6,
   **caractérisé en ce que** l'on forme le vecteur d'espace de courant réel du premier onduleur (WR1) suivant

$$\begin{pmatrix} i_{\propto\_WR1} \\ i_{\beta\_WR1} \\ i_{0\_WR1} \end{pmatrix} = \frac{1}{3} \begin{pmatrix} 2 & -1 & -1 \\ 0 & \sqrt{3} & -\sqrt{3} \\ 1 & 1 & 1 \end{pmatrix} \star \begin{pmatrix} i_{U\_WR1} \\ i_{V\_WR1} \\ i_{W\_WR1} \end{pmatrix}$$

8. Procédé suivant la revendication 6 ou 7,

**caractérisé en ce que** l'on forme le vecteur d'espace de courant réel de chaque autre onduleur (WR2) en fonction des courants ($i_{U\_WR1}$, $i_{V\_WR1}$, $i_{W\_WR1}$, $i_{U\_WR2}$, $i_{V\_WR2}$, $i_{W\_WR2}$) de phase choisis pour sa formation suivant

$$\begin{pmatrix} i_{\propto\_WR2} \\ i_{\beta\_WR2} \\ i_{0\_WR2} \end{pmatrix} = \frac{1}{3} \begin{pmatrix} 3 & 0 & 0 \\ \sqrt{3} & 2\sqrt{3} & 0 \\ 0 & 0 & 0 \end{pmatrix} \; \star \; \begin{pmatrix} i_{U\_WR2} \\ i_{V\_WR2} \\ i_{W\_WR2} \end{pmatrix}$$

ou suivant

$$\begin{pmatrix} i_{\propto\_WR2} \\ i_{\beta\_WR2} \\ i_{0\_WR2} \end{pmatrix} = \frac{1}{3} \begin{pmatrix} 0 & -3 & -3 \\ 0 & \sqrt{3} & -\sqrt{3} \\ 0 & 0 & 0 \end{pmatrix} \; \star \; \begin{pmatrix} i_{U\_WR2} \\ i_{V\_WR2} \\ i_{W\_WR2} \end{pmatrix}$$

ou suivant

$$\begin{pmatrix} i_{\propto\_WR2} \\ i_{\beta\_WR2} \\ i_{0\_WR2} \end{pmatrix} = \frac{1}{3} \begin{pmatrix} 3 & 0 & 0 \\ -\sqrt{3} & 0 & -2\sqrt{3} \\ 0 & 0 & 0 \end{pmatrix} \; \star \; \begin{pmatrix} i_{U\_WR2} \\ i_{V\_WR2} \\ i_{W\_WR2} \end{pmatrix}$$

**9.** Procédé suivant l'une des revendications précédentes,
**caractérisé en ce que** l'on utilise comme régulation de courant d'hystérésis une régulation de courant SDHC.

**10.** Procédé suivant l'une des revendications précédentes,
**caractérisé en ce que** l'on connecte entre eux les onduleurs (WR1, WR2), du côté de la tension alternative, par des filtres (F1, F2) et, du côté de la tension continue, directement.

**11.** Système (1) de régulation pour réguler des courants ($i_{U\_WR1}$, $i_{V\_WR1}$, $i_{W\_WR1}$, $i_{U\_WR2}$, $i_{V\_WR2}$, $i_{W\_WR2}$) de phase de plusieurs onduleurs (WR1, WR2) triphasés montés en parallèle, le système (1) de régulation comprenant,

- pour chaque onduleur (WR1, WR2), un système (9) de mesure de courant pour détecter des valeurs réelles des courants ($i_{U\_WR1}$, $i_{V\_WR1}$, $i_{W\_WR1}$, $i_{U\_WR2}$, $i_{V\_WR2}$, $i_{W\_WR2}$) de phase de l'onduleur (WR1, WR2) et
- pour chaque onduleur (WR1, WR2), un système (11) de régulation du courant d'hystérésis, les systèmes (11) de régulation du courant d'hystérésis étant configurés pour réguler les courants ($i_{U\_WR1}$, $i_{V\_WR1}$, $i_{W\_WR1}$, $i_{U\_WR2}$, $i_{V\_WR2}$, $i_{W\_WR2}$) de phase des onduleurs (WR1, WR2) à l'aide des valeurs réelles, détectées par les systèmes (9) de mesure de courant, des courants ($i_{U\_WR1}$, $i_{V\_WR1}$, $i_{W\_WR1}$, $i_{U\_WR2}$, $i_{V\_WR2}$, $i_{W\_WR2}$) de phase suivant le procédé suivant l'une des revendications précédentes.

FIG 1

FIG 2

EP 3 482 488 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160156291 A1
- WO 2015108614 A1
- EP 3059848 A1


**In der Beschreibung aufgeführte Nicht-Patentliteratur**

- **DI ZHANG et al.** Common-Mode Circulating Current Control of Paralleled Interleaved Three-Phase Two-Level Voltage-Source Converters With Discontinuous Space-Vector Modulation. *IEEE Transactions on Power Electronics,* Dezember 2011, vol. 26 (12), 3925-3935
- **S. K. MAZUMDER.** A novel discrete control strategy for independent stabilization of parallel three-phase boost converters by combining space-vector modulation with variablestructure control. *IEEE Transactions on Power Electronics,* 1070-1083
- **H. WIEßMANN.** Hochdynamisches direktes Stromregelverfahren für Pulswechselrichter im Vergleich zu PWM-Verfahren. Verlag Dr. Hut, 2012